# EUROPÄISCHE PATENTSCHRIFT

(11) **EP 2 836 414 B1**
(45) Veröffentlichungstag und Bekanntmachung des Hinweises auf die Patenterteilung: **22.06.2016**
(21) Anmeldenummer: 13715129.6
(22) Anmeldetag: 14.03.2013
(51) Int. Cl.: B62D 1/16

(54) **LEICHTBAULENKSÄULE AUS FASERVERBUNDWERKSTOFF**
LIGHTWEIGHT STEERING COLUMN COMPOSED OF FIBRE COMPOSITE MATERIAL
COLONNE DE DIRECTION DE CONSTRUCTION LÉGÈRE CONSTITUÉE D'UN MATÉRIAU COMPOSITE RENFORCÉ DE FIBRES

(30) Priorität: 10.04.2012 DE 102012007005
(43) Veröffentlichungstag der Anmeldung: 18.02.2015
(73) Patentinhaber: ThyssenKrupp Presta AG, 9492 Eschen (LI); ThyssenKrupp AG, 45143 Essen (DE)
(72) Erfinder: HEITZ, Thomas, FL-9493 Mauren (LI); REGNER, Sebastian, CH-9445 Rebstein (CH); SCHACHT, Arne, A-6800 Feldkirch (AT)
(74) Vertreter: ThyssenKrupp Intellectual Property GmbH
(86) Internationale Anmeldenummer: PCT/EP2013/000776
(87) Internationale Veröffentlichungsnummer: WO 2013/152825

(56) Entgegenhaltungen:
- DE-A1- 10 242 527
- DE-A1- 19 809 264

## Beschreibung

Die Erfindung bezieht sich auf eine Lenksäulenanordnung für ein Fahrzeug und ein Verfahren zur Herstellung von Komponenten für eine derartige Lenksäulenanordnung.

Insbesondere bezieht sich die Erfindung auf eine Lenksäulenanordnung, die in ihrer Länge und/oder Neigung verstellbar ist.

Gattungsgemäße Lenksäulenanordnungen oder Lenksäulen sind im Einsatzfall in ein Kraftfahrzeug verbaut und übertragen die vom Fahrer auf ein Lenkrad eingebrachten Drehmomente in ein Lenksystem des Fahrzeuges. Weiterhin müssen Lenksäulen im Einsatzfall vielfältige Belastungen aushalten, insbesondere beim Aufprall des Fahrzeuges auf ein Hindernis - dem Crashfall.

### Stand der Technik:

Die DE 10 2005 034 952 B3 offenbart beispielsweise eine Lenksäule, die in ihrer Höhe und ihrer Neigung verstellbar ist. Eine Lenkspindel wird in einem Stellteil, das auch als Manteleinheit bezeichnet wird, drehbar gelagert. Die Manteleinheit ist in einem Halteteil gehalten und das Halteteil ist in einer Halteklammer, die an einer Fahrzeugkarosserie befestigt werden kann, gelagert. Zur Anpassung der Position der Lenkspindel, beziehungsweise eines daran zu befestigenden Lenkrades, ist ein Klemmsystem vorgesehen, dass zwischen einer geöffneten Stellung und einer geschlossenen Stellung mit einem Stellhebel verstellbar ist. In der geöffneten Stellung des Klemmsystems kann die Manteleinheit in ihrer Längsrichtung in Bezug zum Halteteil verschoben werden und gleichzeitig das Halteteil in seiner Neigungsrichtung um eine Schwenkachse gegenüber der Halteklammer verschwenkt werden. In der geschlossenen Stellung des Klemmsystems ist die Lenkspindel gegenüber der karosseriefesten Halteklammer fixiert. Derartige Lenksäulen und Klemmsysteme sind im Stand der Technik in verschiedenen Ausführungen bekannt.

Die Komponenten derartiger Lenksäulen sind entsprechend dem Stand der Technik aus Stahl, Aluminium- oder Magnesiumguss dargestellt.

Ein genereller Wunsch besteht darin, derartige Lenksäulen besonders leicht auszubilden. Hierzu schlägt die DE 101 55 891 B4 allgemein vor, die Manteleinheit (=das zentrale Lagerrohr) aus einem Thermoplast oder einem Thermoplastrohr mit Glas- oder Kohlenstoff- Faser- Füllung darzustellen. Allerdings lässt die Offenbarung offen, wie ein derartiges Lagerrohr konkret ausgebildet sein kann.

Die EP 0 091 671 B1 offenbart eine Sicherheitslenksäule, bei der ein Rohrteil der Lenkspindel einstückig mit einem starren Lenksäulenabschnitt aus faserverstärktem Kunststoff gebildet ist. Dabei wird offenbart, dass die Lenksäule in einer Wickeltechnik um einen Kern, beispielsweise aus Polyurethan-Hartschaum hergestellt wird. Dabei sind die Möglichkeiten für das Design der Lenksäule jedoch stark eingeschränkt.

Die Offenlegungsschrift DE 102 42 527 A1 offenbart ein Lenksäulen-Stützgehäuse bestehend aus einem Polymerverbundmaterial. Das Lenkrohr und die Montageträger sind durch gleichgerichtet Stränge aus Fasern gebildet, die innerhalb eines Verbundmaterials angeordnet sind. Montageträger können durch Spritzguss unter Verwendung kurzer Faser geformt werden, während das Lenkrohr in einem Pressformprozess gebildet wird, der den Gebrauch von längeren oder durchgängigen oder ausgerichteten Fasern beinhaltet. Die Fasern sind gewöhnlich innerhalb einer angrenzenden Schicht aus Fasern nebeneinander liegend und senkrecht zueinander angeordnet oder nebeneinander liegend und parallel zueinander angeordnet.

Aus der DE 198 09 264 A1 ist eine Fasergelegeanordnung und Verfahren zur Herstellung eines Vorformlings bekannt. Dabei werden Gelegeschichten, bestehend aus gleichgerichteten nebeneinander angeordneten Endlosfasern, auf flächenförmige Schmelzklebergebilde gelegt und mit diesen vernäht. Anschließend wird zur Herstellung des Vorformlings für ein Faserverbundwerkstoffbauteil die Fasergelegeanordnung erwärmt, formgepreßt, abgekühlt und entformt. Die entstandenen Vorformlinge werden dann in einem hier nicht beschriebenem Verfahren in ein Bauteilformwerkzeug eingelegt, wo z. B. eine Kunstharzmatrix zugeführt wird und die Aushärtung des Verbundes zum fertigen Faserverbundwerkstoffbauteil erfolgt. Mit analytischen und numerischen Berechnungsmethoden sind die Spannungsverläufe in Bauteilen ermittelbar. Die Verstärkungselement-Struktur berücksichtigt diese Berechnungen, indem die Verstärkungsfasern parallel zu den Spannungsverläufen angeordnet sind und die Bauteildicke den Belastungen angepasst wird. Genau an dieser Stelle stoßen die zuvor genannten konventionellen Faserhalbzeuge an ihre Grenzen. Die Verstärkungsfasern müssen unbedingt parallel zur Beanspruchungsrichtung liegen, da nur so das volle Potenzial ihrer Leistungsfähigkeit ausgenutzt werden kann. Verstärkungsfasern sollten weder verdreht noch wellig im Bauteil vorliegen, da hierdurch Schwachstellen impliziert werden. Um diesen Anforderungen an das Verstärkungselement gerecht werden zu können, bedarf es Methoden die eine definierte Lage der Verstärkungsfasern garantieren.

### Aufgabe der Erfindung:

Aufgabe der Erfindung ist es, eine Leichtbaulenksäule bereitzustellen, bei der ein großes Maß an Designfreiheit gegeben ist.

### Lösungsansatz:

Gelöst wird die Aufgabe durch eine Lenksäule entsprechend dem Patentanspruch 1. In den Unteransprüchen sind vorteilhafte Weiterbildungen der Erfindung dargestellt.

Eine Lenksäule für ein Kraftfahrzeug umfassend:
▪ eine Lenkspindel, die um ihre Achse drehbar in einer Lenkspindellagereinheit gelagert ist,
▪ ein Halteteil, das dazu ausgebildet ist, die Lenkspindellagereinheit direkt oder indirekt mit der Karosserie des Kraftfahrzeuges zu verbinden,
wobei zumindest eines, der Bauteile der Lenksäule, zumindest teilweise aus einem Werkstoff gebildet ist, der Verstärkungsfasern enthält, die dadurch gekennzeichnet ist, dass die Verstärkungsfasern in einer Ebene nicht nur gestreckt, sondern auf vorgegebenen Bahnen in winkelunabhängiger Ablage angeordnet sind und mittels mehrerer Haltefasern, die unter einem Winkel, der größer als 0° ist, zu den Bahnen der Verstärkungsfasern verlaufen und die Verstärkungsfasern umschließen, an einem Träger aus Trägerfasern, die in einem Webverfahren miteinander verbunden sind, fixiert sind und ein Verstärkungselement bilden, bietet den Vorteil, dass die Verstärkungsfasern in die Richtungen ausgerichtet sein können, entlang derer die Kräfte der im Betriebszustand der Lenksäule am größten sind. Dadurch kann eine hohe Steifigkeit auch für verschiedene Einsatzfälle und Design-Auslegungen der Lenksäule erreicht werden.

In bevorzugter Weise sind die Verstärkungsfasern aus Kohlenstofffasern oder als Aramid- oder als Glasfaser oder einer Mischung aus diesen Fasern ausgebildet. Dabei werden bevorzugt mehrere Fasern, die auch als Filamente bezeichnet werden können, zu Rovings gruppiert und gemeinsam verarbeitet. Im Sinne der Erfindung wird der Begriff Filament und Faser synonym verwendet. Ein Roving ist eine Gruppierung von Filamenten, die jedoch nicht zu einem Garn, beispielsweise durch Spinnen, miteinander verbunden sind. Entsprechend sind im Unterschied zu den Rovings bei Garnen die Fasern miteinander verbunden. Unter einem Faden versteht man ein Garn mit einer beschränkten Länge.

Zur Erhöhung der Festigkeit des Bauteils der Lenksäule ist es anzustreben, die Verstärkungsfasern möglichst gerade auszurichten, insbesondere möglichst wenig in Bögen umzulenken. Bögen mit sehr kleinen Radien, beispielsweise im Bereich von unter 1mm sind nach Möglichkeit vollständig zu vermeiden. Zumindest sollen entlang der Hauptkraftrichtungen, die beim Einsatz des Bauteils im Bauteil auftreten, derartige Bögen vermieden werden.

Die Haltefasern können gebildet werden durch Fäden, die aus Polyester oder auch anderen Werkstoffen dargestellt sind. Dabei können auch Garne als Haltefasern eingesetzt werden, wie sie in der Textilindustrie bekannt sind. Die Haltefasern umschließen die Verstärkungsfasern, um die Verstärkungsfasern in einer räumlichen Position zueinander zu fixieren. Mit Vorzug erfolgt die Fixierung durch obere Haltefasern, die mit unteren Haltefasern verkettet oder verbunden werden und auf diese Weise die Verstärkungsfasern umschließen.

Der Träger, der auch als Stickgrund bezeichnet werden kann, besteht aus Trägerfasern, die in einem Webverfahren miteinander verbunden sind. Anstelle eines Webverfahrens kann auch ein anderes Verfahren zur Verbindung von Fasern bevorzugt ohne Zusatzstoffe eingesetzt werden, wie es beispielsweise das Flechten oder das Wirken darstellt. Alle diese Verfahren werden im Rahmen dieser Offenbarung unter dem Begriff Webverfahren zusammengefasst. Die Trägerfasern können aus Polyester oder auch anderen Werkstoffen gebildet sein. Dabei können auch Garne zur Bildung der Trägerfasern eingesetzt werden, wie sie in der Textilindustrie bekannt sind. Der Einsatz von Zusatzstoffen, wie beispielsweise Kunstharze, zur Verbindung der Trägerfasern zur Ausbildung des Trägers ist zwar möglich, hat aber Nachteile.

Es ist auch denkbar und möglich, gerichtete Trägerfasern, die nicht miteinander verbunden sind, durch Garne, die als Verbindungsfasern dienen, zu verbinden und auf diese Weise den Träger zu bilden. Dieser Anwendungsfall ist dann zu bevorzugen, wenn die Trägerfasern zusätzliche Kräfte aufnehmen sollen. In diesem Falle sollen die Trägerfasern im Träger mit möglichst wenig Abweichungen von einer geradlinigen oder spline-förmigen Erstreckung mit Radien von mehr als 2mm und insbesondere möglichst wenig Umlenkungen enthalten sein. Zur Fixierung sind dann die Verbindungsfasern vorgesehen, die so ausgerichtet sind, dass die Trägerfasern nur geringe Abweichungen von einem geradlinigen Verlauf aufweisen oder alternativ einen Verlauf aufweisen der spline-förmigen ist und dessen Radien größer als 2mm sind.

In einer Ausführungsform der Erfindung bilden Trägerfasern und/oder die Verbindungsfasern des Trägers Haltefasern. Unter Verwendung von separaten oberen Haltefasern kann die Umschließung der Verstärkungsfasern mit den Haltefasern bewirkt werden. Auch bei dem Einsatz eines Trägers können zusätzlich noch separate untere Haltefasern vorgesehen sein, die mit separaten oberen Haltefasern zur Bildung der Umschließung verbunden werden. Teile des Gewebes des Trägers werden in diesem Fall von den Haltefasern, die die Verstärkungsfasern umschließen, umschlossen.

Wenn der Träger nicht zur Aufnahme von zusätzlichen Kräften ausgelegt ist oder wenn die im Einsatzfall der Lenksäule aufzunehmenden Kräfte entsprechende Werte überschreiten, so kann mindestens ein Gelege vorgesehen sein, das parallel ausgerichtete Gelegefasern, die miteinander verbunden sind umfasst, das zusätzliche Kräfte im Einsatzfall der Lenksäule aufnehmen kann. Zur Ausbildung des Bauteils der Lenksäule werden bevorzugt die in Bahnen verlaufenden Verstärkungsfasern auf der Oberfläche eines des mindestens einen Geleges angeordnet. Dabei ist es auch vorteilhaft die mindestens zwei Gelege vorzusehen, zwischen denen die in Bahnen verlaufenden Verstärkungsfasern angeordnet sind. Bei den eingesetzten Gelegen sind die Gelegefasern möglichst parallel ausgerichtet und durch Verbindungsfasern miteinander verbunden. Die Gelegefasern übernehmen die Funktion der Aufnahme von Kräften im fertigen Bauteil. Die Verbindungsfasern übernehmen nur die Funktion zur Stabilisierung des Geleges für die Weiterverarbeitung. Alternativ für Gelege können auch Gewebe eingesetzt werden, bei denen die Gewebefasern in klassischer Webtechnologie miteinander verbunden sind. Durch die häufigeren Umlenkungen aller Fasern im Gewebe im Vergleich zum Gelege, können beim Einsatz von Geweben nur geringere Kräfte übertragen oder aufgenommen werden. Sowohl Gelegefasern als auch Gewebefasern bestehen bevorzugt aus Kohlenstoff, Aramid oder Glas. Die Auswahl, ob ein Gelege oder ein Gewebe eingesetzt werden soll, ist durch die im Einsatzfall der Lenksäule aufzunehmenden Kräfte bestimmt.

Zur Erhöhung der Steifigkeit im fertigen Bauteil sind beim Einsatz von mindestens zwei Gelegen die Richtungen der jeweils in einem Gelege zueinander parallel ausgerichteten Gelegefasern von Gelege zu Gelege verschieden. Mit Vorteil ist der Winkel, den die Gelegefasern zueinander einnehmen, bevorzugt in einem Bereich von mindestens 10° bis maximal 80°. Weiter bevorzugt sind Winkel im Bereich von 20 bis 50°. Dabei sollten bevorzugt die Winkel der Fasern zweier unmittelbar benachbarter Gelegen zueinander weniger als 60° betragen.

In einem weiteren Schritt kann die Baueinheit mit einem aushärtbaren Harz getränkt werden und bildet nach dem Aushärten das Bauteil der Lenksäule, das die Verstärkungsfasern enthält.

Die Aufgabe der Erfindung wird durch ein Verfahren zur Herstellung einer Lenksäule entsprechend dem Patentanspruch 6 gelöst. In Patentanspruch 7 ist eine vorteilhafte Weiterbildung der Erfindung dargestellt. Weitere vorteilhafte Weiterbildungen sind in den Unteransprüchen dargestellt. Die erfindungsgemäße Lenksäule umfasst:
▪ eine Lenkspindel, die um ihre Achse drehbar in einer Lenkspindellagereinheit gelagert ist,
▪ ein Halteteil, das dazu ausgebildet ist, die Lenkspindellagereinheit direkt oder indirekt mit der Karosserie des Kraftfahrzeuges zu verbinden,
wobei zumindest eines der Bauteile der Lenksäule als Faserverbundbauteil ausgebildet ist. Dabei umfasst das erfindungsgemäße Verfahren folgende Schritte:
a) Positionieren eines Trägers, bestehend aus Trägerfasern, die in einem Webverfahren miteinander verbunden sind;
b) Winkelunabhängiges Positionieren von Verstärkungsfasern entlang vorgegebener Bahnen von Spannungsverläufen auf der Oberfläche des Trägers und fixieren der Verstärkungsfasern mit Haltefasern in einem Näh- oder Stickverfahren, zur Bildung eines Verstärkungselements;
   bevorzugt erfolgt
c) das Aufbringen des Verstärkungselements auf zumindest einem Gelege, umfassend jeweils parallel ausgerichtete Gelegefasern, die miteinander verbunden sind, zur Bildung eines Verstärkungspakets;
d) Verbringen des Verstärkungselements oder, falls vorhanden, des Verstärkungspakets in ein Werkzeug zur Formung der Topologie des Verstärkungselements oder, falls vorhanden, des Verstärkungspakets;
e) Ausgießen des Verstärkungselements oder falls vorhanden des Verstärkungspakets mit einem aushärtbaren Harz;
f) Aushärten des Harzes und Bildung des Faserverbundbauteils;
g) Montage der Lenksäule unter Einbau des Faserverbundbauteils in die Lenksäule.

Die Topologie des geformten Faserverbundbauteils, das aus den Verstärkungsfasern, dem Träger und dem mindestens einem Gelege und dem ausgehärteten Harz besteht, kann durch das Verfahren in einfacher Weise an das gewünschte Design und/oder die Erfordernisse an die Lenksäule in ihrem Einsatzfall angepasst werden, dabei können Ergebnisse aus Modellrechnungen effektiv in eine Verstärkungsfaserstruktur umgesetzt werden. Bevorzugt wird mit einem Stickautomaten gearbeitet, der den Faserverlauf scannt und entsprechend dem Softwaremodell Verstärkungsfasern nach dem optimalen Stickmuster auf ein Trägermaterial aufnäht.

Folgende Vorteile ergeben sich gegenüber anderen Fertigungsverfahren:
- Winkelunabhängiges Positionieren: Einzelne Fasern können beliebig angeordnet werden, wobei der Ablagewinkel einer einzelnen Faser entlang der Faser zwischen 0° und 360° variiert werden kann. Der Stickautomat positioniert und fixiert die Faser, die typischerweise von einer Spule abgewickelt wird, kontinuierlich entlang der Faser auf vorgegebenen Bahnen, denen keine Grenzen gesetzt sind. Faseranordnungen sind somit nicht darauf begrenzt, dass Fasern parallel zueinander oder in geraden Bahnen angeordnet sind,
- unterschiedliche Bauteildicken können durch wiederholtes Übernähen der gleichen Position hergestellt werden,
- hohe Positioniergenauigkeit und
- endabmessungsnahe Verstärkungselemente reduzieren Abfall und Kosten.

Das Verfahren eignet sich hervorragend für komplexere Verstärkungselement-Strukturen mit gezielten lokalen Verstärkungen wie sie in Lenksäulen erwünscht sind.

Insbesondere können neben den Verstärkungen durch die Verstärkungsfasern auch Verstärkungen durch geometrische Strukturen wie beispielsweise Sicken oder Falze in der Topologie dargestellt werden. Auf diese Weise wird eine optimale Kombination der Eigenschaften der Verstärkungsfasern mit den Eigenschaften des Trägers und des mindestens einen Geleges und des ausgehärteten Harzes erreicht.

Zur Verkürzung der Prozesskette ist des vorteilhaft zur Ausbildung des Faserverbundbauteils, in einem Verfahrensschritt vor dem Ausgießen des Verstärkungspakets mit einem aushärtbaren Harz ein oder mehrere Funktionselemente an vordefinierten Stellen zu positionieren, um durch die daran anschließenden Verfahrensschritte mit den Verstärkungsfasern verbunden zu werden, um mit dem Faserverbundbauteil ein einstückiges Bauteil zu bilden. Hier können beispielsweise Metall-Inlays eingesetzt werden, die die Schwenkachse tragen oder eventuell notwendige Verzahnungen für die Fixiereinrichtung aufweisen.

Es ist auch denkbar und möglich, ein oder mehrere Funktionselemente an vordefinierten Stellen mit dem Träger zu verbinden und die Verstärkungsfasern erst danach auf den Träger zu befestigen. Auch eine Kombination mit Funktionselementen, die wie zuvor beschrieben, nach der Verbindung der Verstärkungsfasern mit dem Träger eingebunden werden, ist denkbar und möglich.

Als Funktionselemente können Elementen, die für Tragfunktionen vorgesehen sind, wie Metall-Inlays mit Bohrungen zur Verschraubung an weiteren Bauteilen oder Elemente mit Gleitführungen oder Elemente mit Verzahnungen oder anderen Formschlusselementen, eingesetzt werden. Denkbar und möglich sind auch Funktionselemente für die Weiterleitung von elektrischem Strom, sensorische Erfassung von physikalischen Größen, Piezo-Aktuatoren für aktive akustische Funktionen an der Lenksäule, sowie weitere Funktionen.

Mit Vorteil weist das Faserverbundbauteil nach der Entnahme aus dem Werkzeug, in dem die Formung der Topologie und das Vergießen erfolgt ist, bereits die fertige Gestalt des Bauteils auf, das in die Lenksäule verbaut werden soll. Hierzu wird mit Vorteil das Verstärkungspaket an seinem Rand mit einer vorgegebenen Umfangskontur beschnitten, bevor es in das Werkzeug eingebracht wird. Es ist auch denkbar und möglich, den Beschnitt während der Einbringung des Verstärkungspakets in das Werkzeug darzustellen. Je nach Anwendungsfall kann es vorteilhaft sein, im Werkzeug Trennwerkzeuge zu integrieren, die einen entsprechenden Konturbeschnitt im Werkzeug ermöglichen. Insbesondere können auch vor oder während der Einbringung des Verstärkungspakets in das Werkzeug das Verstärkungspaket mit Aussparungen versehen werden, die für Funktionen des fertigen Faserverbundbauteils erforderlich sind.

Im Folgenden wird die Erfindung anhand von Zeichnungen veranschaulicht. Es zeigen:
- Figur 1:: eine Ausführungsform für eine erfindungsgemäße Lenksäule;
- Figur 2:: eine andere Ansicht der Lenksäule aus Figur 1;
- Figur 3:: Beispiel eines Bauteils einer Lenksäule, nämlich eines Halteteils, das als Faserverbundbauteil hergestellt ist;
- Figur 4:: Beispiel für Vorformen eines Halteteils einer Lenksäule, die als Faserverbundbauteil hergestellt sind;
- Figuren 5, 6, 7,8, 9:: schematische Darstellung der Verbindung von Verstärkungsfasern mit einem Träger;
- Figuren 10, 11:: schematische Darstellung von Prozessschritten zur Befestigung der Verstärkungsfasern am Träger, zur Darstellung des Halteteils der erfindungsgemäßen Lenksäule in einem Ausführungsbeispiel;
- Figuren 12, 13, 14:: schematische Darstellung von Strukturen für Gelege;
- Figuren 15, 16, 17, 18:: schematische Darstellung von Verfahrensschritten zur Darstellung des Halteteils der erfindungsgemäßen Lenksäule, gemäß der Erfindung;
- Figuren 19, 20, 21:: schematische Darstellung von Verfahrensschritten zur Darstellung eines Schwenkhebels der erfindungsgemäßen Lenksäule.

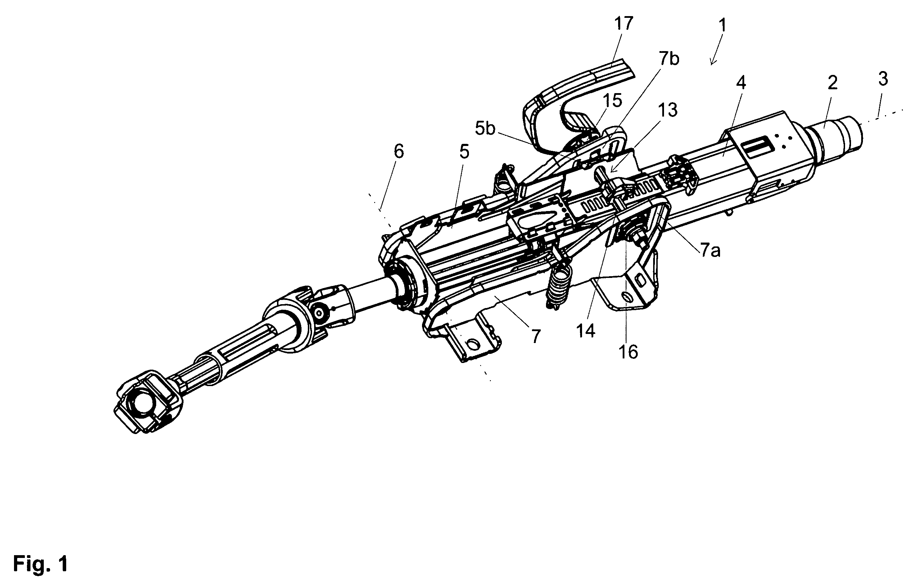

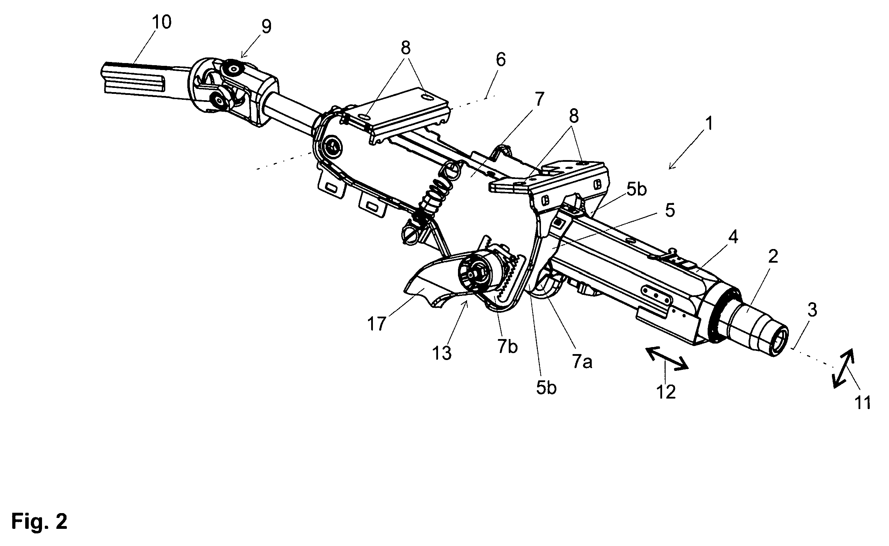

Die Figuren 1 und 2 veranschaulichen eine erfindungsgemäße Lenksäule 1, die eine Lenkspindel 2 umfasst, die um ihre Drehachse 3 drehbar in einer Manteleinheit 4 gelagert ist. Die Manteleinheit 4 ist in einem Schwenkhebel 5 entlang der Längsachse 3 der Lenkspindel verschiebbar geführt. Der Schwenkhebel 5 ist um eine Schwenkachse 6 in einem Halteteil 7 schwenkbar gelagert. Das Halteteil 7 kann in Befestigungspunkten 8 an der nicht dargestellten Karosserie befestigt werden. Die von einem Fahrer über ein (nicht dargestelltes) Lenkrad in die Lenkspindel 2 eingebrachte Drehbewegung wird über ein Kardangelenk 9 und weitere Lenkwellenteile 10 in das nicht dargestellte Lenkgetriebe eingebracht. Zur Erhöhung des Komforts des Fahrers kann die Lenksäule in ihrer Höhe in die Verstellrichtung 11 und in ihrer Länge in die Verstellrichtung 12 verstellt werden. Hierzu ist ein Fixiermechanismus 13 vorgesehen, der einen im Stand der Technik bekannten Spannapparat umfasst. Der Spannapparat weist einen Spannbolzen 14 auf, einen Nockenmechanismus 15, ein Gegendrucklager 16 und einen Spannhebel 17. Durch Verdrehung des Spannhebels 17 werden die beiden Nocken des Nockenmechanismus 15 gegeneinander verdreht und die Seitenwangen 7a, 7b zusammengezogen, wodurch eine reibschlüssige Verspannung der Seitenwangen 7a, 7b des Halteteils 7 mit den Seitenflächen des Schwenkhebels 5 und wiederum mit Seitenflächen der Manteleinheit 4 erfolgt.

Der Spannbolzen 14 durchsetzt Langlöcher in den Seitenwangen 7a, 7b des Halteteils 7 und Löcher in den Seitenflächen 5a, 5b des Schwenkhebels 5. Der Nockenmechanismus 15 ist auf den einen Ende des Spannbolzens angeordnet und das Drucklager 16 auf dem anderen Ende des Spannbolzens angeordnet. Die Seitenwangen 7a, 7b, sowie die Seitenflächen 5a, 5b, als auch die Manteleinheit 4 sind zwischen dem Nockenmechanismus 15 und den Drucklager 16 angeordnet.

Durch Drehen des Stellhebels 17 kann das Fixiersystem 13 wahlweise in eine geöffnete Stellung oder eine geschlossene Stellung umgeschaltet werden. In der geöffneten Stellung kann die Lenkspindel 2, beziehungsweise das daran befestigte Lenkrad (nicht dargestellt in den Figuren) in ihrer Position verstellt werden, insbesondere in der Längsrichtung 12 und der Höhen- oder Neigungsrichtung 11 verschoben werden. In der geschlossenen Stellung des Fixiersystems 13 ist die Lenksäule in ihrer Position fixiert. Derartige Lenksäulen sind im Stand der Technik bekannt.

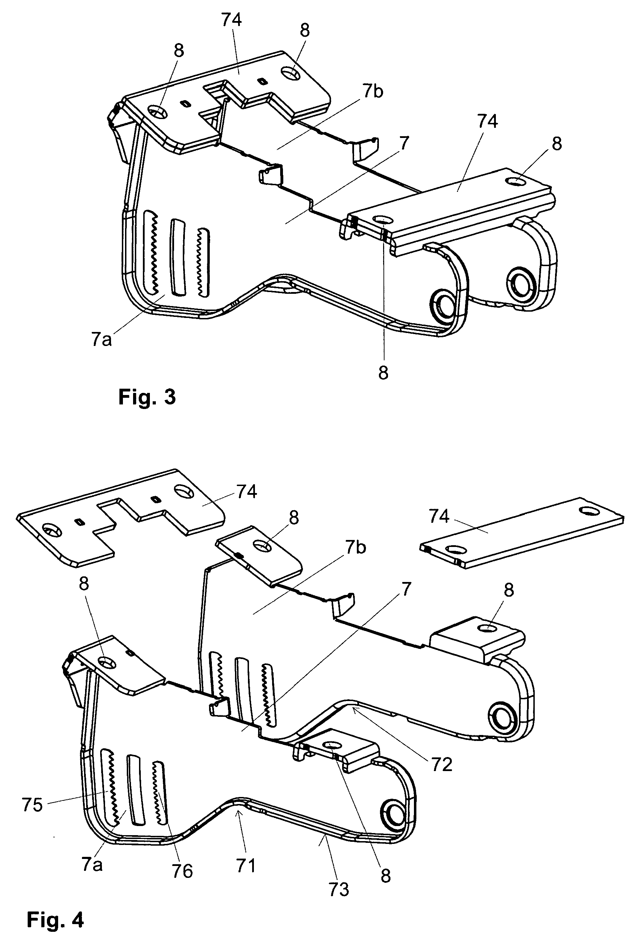

Am Beispiel des Halteteils 7 wird in den Figuren 1 bis 15 die Darstellung des Halteteils mit Verstärkungsfasern veranschaulicht. Dabei zeigt die Figur 3, dass Halteteil 7 in seiner einbaufertigen Ausbildung. Hierzu wird zunächst ein Zwischenbauteil 71 dargestellt. Das Zwischenbauteil 71 wird mit einem weiteren Zwischenbauteil 72 in späteren Verfahrensschritten zur Ausbildung des Halteteils 7 verbunden.

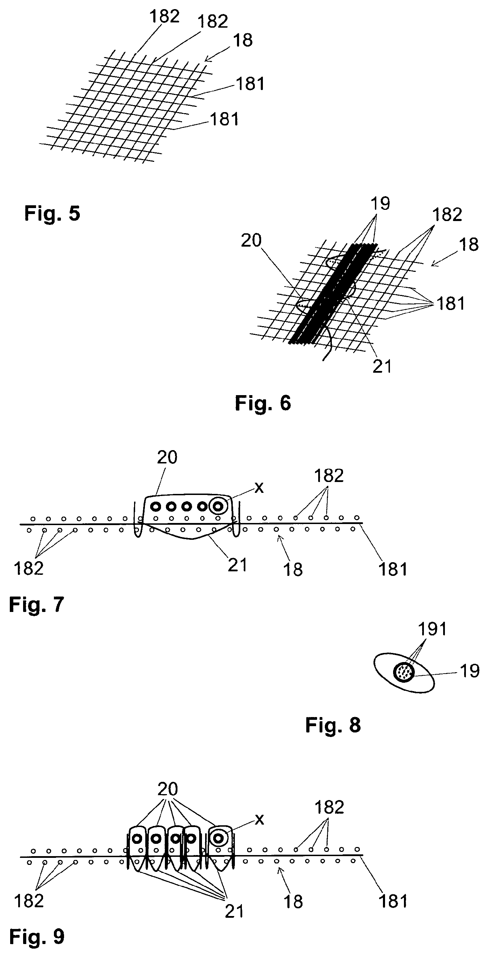

Zunächst wird ein Träger 18 bestehend aus Trägerfasern 181, 182 gebildet. Die Trägerfasern sind im Beispiel mit einem Webverfahren miteinander verbunden (vgl. Figur 5). Wie in den Figuren 6, 7 und 8 veranschaulicht, werden auf diesen Träger 18 Verstärkungsfasern 191, die in Rovings 19 gebündelt sind, aufgebracht und mit einem oberen Haltfaden 20 in einem unteren Haltefaden 21 mit dem Träger verbunden. Als Verbindungsverfahren dient hier eine klassische Näh-Technologie. Mit dieser Technik ist es möglich, Verstärkungsfasern entlang von Spannungverläufen eines Bauteils abzulegen. Optimal eingesetzt, kann diese Technik zu deutlichen Materialeinsparungen aufgrund des optimierten Faseraufbaus beitragen. Dabei werden die einzelnen Verstärkungsfasern in der Ebene nicht nur gestreckt aufgebracht, sondern auf beliebigen Bahnen, so dass eine gewünschte komplexe Faseranordnung erzielt wird. Vielfach wird diese Technologie auch als Stick-Technologie bezeichnet.

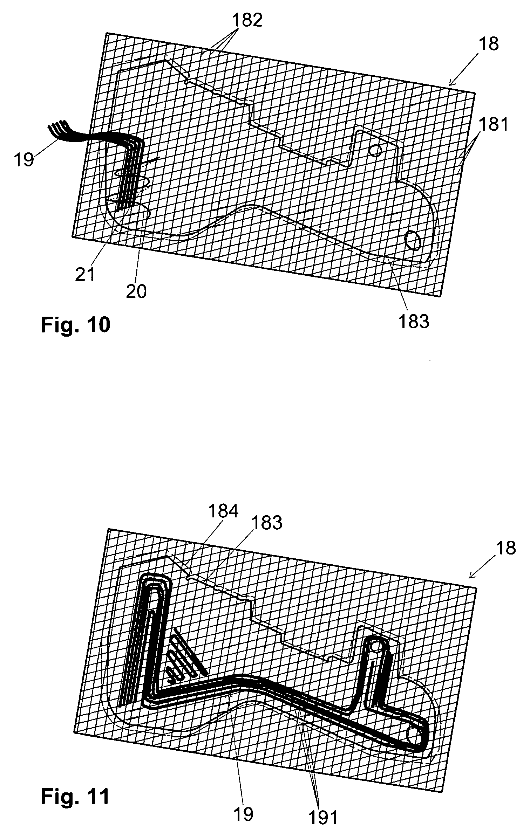

Zur Veranschaulichung sind in Figur 7, die entsprechenden Rovings 19, Trägerfäden 181, 182 und Haltefäden 20, 21 weit auseinandergezogen dargestellt. Es ist jedoch vorgesehen, die Fäden dicht aufeinander mit einer gewissen Vorspannung anzupressen. Dies erfolgt durch eine Vorspannung der Haltefäden 20, 21 beim Nähprozess. Auf diese Weise gewinnt der Träger 18, auf dem die Verstärkungsfaser 19 angeordnet sind, bereits eine gewisse Festigkeit. In den Figuren 10 und 11 ist die Anwendung dieses technologischen Prozesses auf die erfindungsgemäße Lenksäule veranschaulicht. In Figur 8 ist die Bündelung der Verstärkungsfasern 191 zu den Rovings 19 in vergrößertem Ausschnitt x von Figur 7 veranschaulicht. In Figur 9 ist eine alternative Befestigungstechnik dargestellt, bei der jeder einzelne Roving 19 mit Haltefäden 20, 21 am Träger 18 befestigt sind. Beide Ausführungen wie in Figur 7 oder in Figur 9 können wahlweise verwendet werden, auch wenn in Folgedarstellungen nur eine der Variante dargestellt ist.

In den Figuren 10 und 11 ist veranschaulicht, wie die Rovings 19 mit den Haltefäden 20, 21 auf den Trägerfasern 181, 182 festgelegt werden. Auf diese Art sind die Verstärkungsfasern 191 mittels Haltefasern 20, 21 an einer Fläche, die eine zukünftige Wandfläche des Halteteils 7 bildet fixiert. In den Figuren 10 und 11 ist der Umriss 183, der in der Folge den Rand 73 des Zwischenbauteils 71 (vgl. Figur 4) bildet. Hierzu kann der Träger 18 entlang der Trennlinie 184 nach vollständigem Aufbringen der Verstärkungsfasern 191 aufgetrennt werden.

Es ist auch denkbar und möglich zur Bildung des Randes 73 des späteren Halteteils 7, den Umriss 183 durch eine Verleimung mittels einer Leimraupe oder einer Verschweißung, beispielsweise mittels eines Laserstrahls, zu fixieren und danach die Trennoperation entlang der geringfügig außerhalb verlaufenden Trennlinie 184, auszuführen.

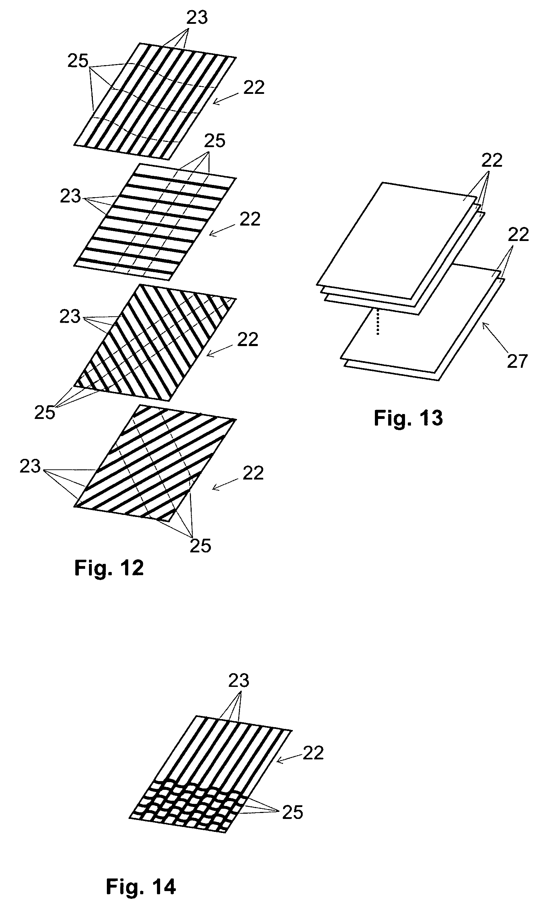

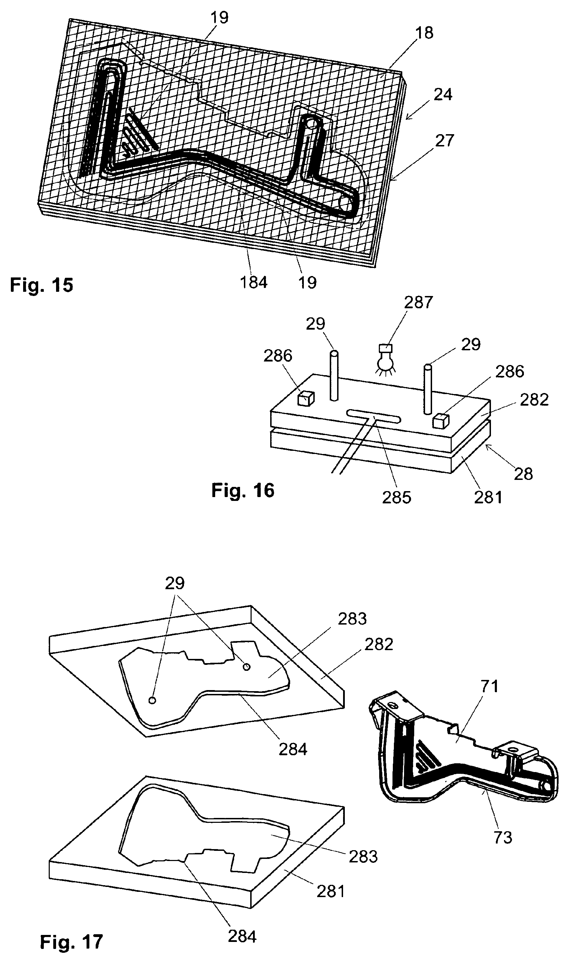

Zur Erhöhung der Grundfestigkeit kann es vorgesehen sein vor der Weiterverarbeitung zusätzliche Gelege 22 bestehend aus Gelegefasern 23 vorzusehen (vgl. Figuren 12, 13), die mit den Verstärkungsfasern 19 zu einem Paket 24 gruppiert werden. Die Gelege 22 weisen je Gelege parallel ausgerichtete Gelegefasern 23 auf, die auf geeignete Weise miteinander verbunden sein können. Hierzu können Gelegehaltefäden 25, wie sie in der Figur 12 veranschaulicht sind, vorgesehen sein. Es ist auch denkbar und möglich, auf Gelegehaltefäden zu verzichten und entsprechend der Darstellung der Figur 14 weitere Gelegefasern 26 vorzusehen, die winklig zu den ersten Gelegefasern 23 ausgerichtet sind und diese durch entsprechende Umschlingungen im Gelege 22 fixieren. Die Figur 13 veranschaulicht wie mehrere Gelege deren Gelegefasern zueinander unter einem Winkel der größer als 0° ist, zu einem Gelegepaket 27 gruppiert werden. Dieses Gelegepaket 27 kann mit dem Träger 18 auf den die Rovings 19 mit den Verstärkungsfasern 191 befestigt sind zum Paket 24, wie es in der Figur 15 veranschaulicht ist, paketiert werden. Mit Vorteil erfolgt die Auftrennung entlang der Trennlinie 184 erst nach der Bildung des Paketes 24.

Im einfachsten Fall erfolgt diese Auftrennung beim Einlegen des Paketes 24 in das Form- und Füllwerkzeug 28. Das Füllwerkzeug 28 weist mindestens zwei Füllöffnungen 29 auf, durch die Harz eingespritzt wird und Luft entweichen kann. Zumindest eine der Füllöffnungen 29 kann auch als Überströmöffnung für überschüssiges eingefülltes Harz dienen. Weiter weist das Werkzeug 28 ein Unterwerkzeug 281 und ein Oberwerkzeug 282 auf. Das Unterwerkzeug 281 und das Oberwerkzeug 282 umschließen einen Formraum 283, der die Topologie des Zwischenbauteils 71 aufweist. Der Formrand 284 kann als Trennkante ausgebildet sein, der den Beschnitt des Pakets 24 entlang der Trennlinie 184 beim Schließen der Werkzeughälften bewirkt. Zur Ausbildung des Bauteils, des Zwischenbauteils 71, werden nach dem Einlegen des Paketes 24 in den Formraum 283 das Oberwerkzeug 282 und das Unterwerkzeug 281 zusammengefahren. Dabei kann der oben ausgeführte Beschnitt entlang dem Formrand 284 erfolgen. Im Anschluss daran wird ein Kunstharz durch zumindest eine der Füllöffnungen 29 eingespritzt, wobei der Formraum möglichst vollständig entlüftet wird. Im Anschluss wird das Harz ausgehärtet. Hierfür ist das Harz mit einem Härter versetzt. Diese Aushärtung kann erfolgen durch Einbringen einer erhöhten Temperatur und/oder durch Einbringen von Ultraschall und/oder durch eine Einbringung von ultraviolettem Licht in den Formraum. Hierfür können entsprechende Heizelemente 285 und/oder Sonotroden 286 und/oder ultraviolette Lichtquellen (UV-Lichtquellen) 287 vorgesehen sein. Bei der Ausbildung des Werkzeuges 28 muss eine entsprechende Durchlässigkeit von Wärme und/oder Ultraschall und/oder ultraviolettem Licht gewährleistet werden.

Nach Abschluss der Vernetzung beziehungsweise des Aushärtens des Harzes wird, wie in Figur 17 veranschaulicht, das Werkzeug geöffnet und das Zwischenbauteil 71 entnommen. Wie in der Figur 4 veranschaulicht, wird auch das zweite Zwischenbauteil in gleicher Weise dargestellt und wird mit Verbindungselementen 74 zum Halteteil 7 verbunden.

Im Beispiel entsprechend der Figur 4 sind Rastelemente 75 und 76 dargestellt, die als Funktionselemente mit dem Paket 24 in den Formraum 283 des Werkzeuges 28 eingelegt werden können und beim Tränken mit dem Harz mit den Verstärkungsfasern 191 verbunden werden. Diese Ausführungsform ist in der Figur 17 veranschaulicht.

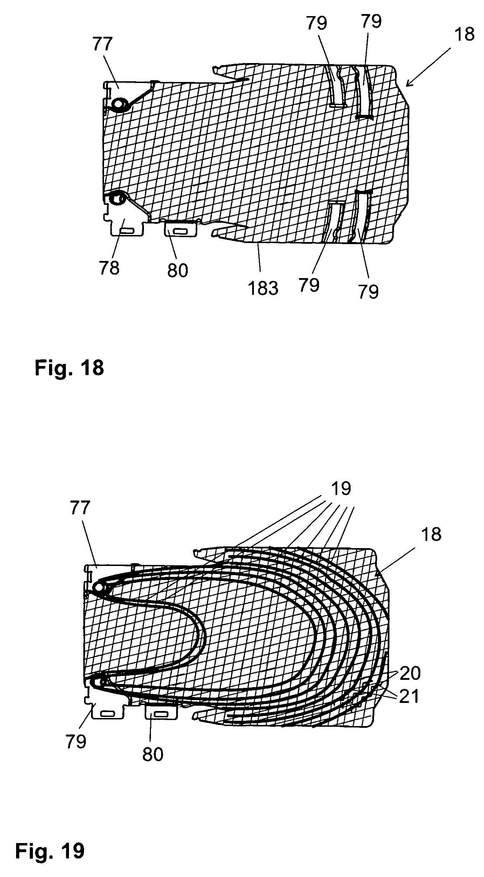

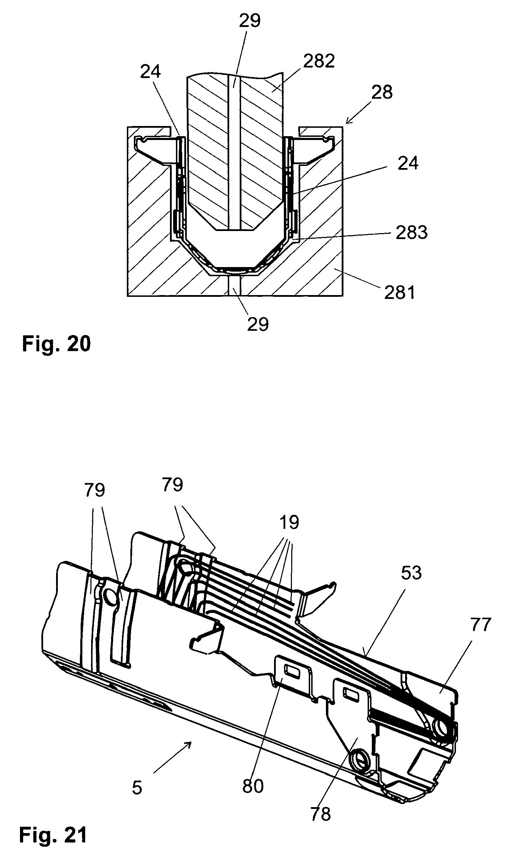

Die Figuren 18, 19, 20, 21 veranschaulichen die Darstellung eines Schwenkhebels 5 entsprechend der Erfindung. Im Wesentlichen erfolgt die Herstellung in gleicher Weise wie die Herstellung des Halteteils 7. Auf einem Träger 18 werden die Schwenkachsenverstärkung 77, 78 und die Druckschienen 79 und im Beispiel den Kabelhalter 80 als Funktionselemente positioniert (vgl. Figur 18). Ein Umriss 183 bildet den späteren Rand 53 des Schwenkhebels 5. Der Umriss 183 kann in einer der Fertigungsstufen ausgeschnitten werden. Anschließend, werden bevorzugt auf der von den Funktionselementen abgewandten Seite des Trägers die Verstärkungsfasern 191 in Rovings 19 gruppiert mit Haltefasern 20, 21 auf den Träger fixiert (vgl. Figur 19). Aus Gründen der Übersichtlichkeit sind in Figur 19 die Haltefäden 20, 21, der untere Haltefaden 21 und der obere Haltefaden 20 nur in einem kleinen Ausschnitt dargestellt. Die Rovings 19 sind insgesamt mit den Haltefäden 20, 21 auf dem Träger 18 befestigt. Auch zur Ausbildung des Halteteils 7 kann mit Vorteil in einem folgenden Verfahrensschritt eine Paketierung mit zusätzlichen Gelegen 22 zu einem Paket 24 erfolgen. Allerdings sollten keine Gelege die Funktionsflächen der Druckschienen bedecken. Entsprechend sind mit Vorteil alle Gelege auf der Seite des Trägers angeordnet, wo die Rovings angeordnet sind. Anschließend wird entsprechend der Figur 20 das gesamte Paket 24 in das Werkzeug 28 mit dem Unterwerkzeug 281 eingelegt und wie zuvor beschrieben mit Harz vergossen. Der Formraum 283, der vom Oberwerkzeug 282 und Unterwerkzeug 281 umschlossen wird, weist eine im Querschnitt gesehen im Wesentlichen U-förmige Gestalt auf. Auch hier ist es denkbar und möglich den Beschnitt der Kontur beim Schließen des Werkzeuges durchzuführen. Das Harz wird durch die Kanäle 29 eingefüllt und die Luft durch einen der Kanäle 29 abgeführt. Nach dem Aushärten wird das Bauteil entformt und gegebenenfalls noch weiteren Nachbearbeitungsschritten unterworfen. Im Beispiel sind keine Nachbearbeitungsschritte erforderlich, sodass unmittelbar der Schwenkhebel 5 gebildet ist. Durch die entsprechende Auswahl der Funktionselemente konnte das erforderliche Mass für eine Nachbearbeitung zumindest reduziert werden, wenn nicht gar ganz überflüssig gemacht werden. In der Figur 21 sind schematisiert die Rovings 19 veranschaulicht, auch wenn die je nach Anwendungsfall am fertigen Bauteil an der Oberfläche nicht sichtbar sind, da sie beispielsweise vom Gelegepaket 27 oder einem nicht durchsichtigen Harz bedeckt sind.

Zur Bildung der Lenksäule werden die einzelnen Bauteile, von denen zumindest das eine Bauteil Verstärkungsfasern enthält, zusammen montiert.

### Bezugszeichenliste

- 1: Lenksäule
- 2: Lenkspindel
- 3: Lenkspindelachse
- 4: Manteleinheit
- 5: Schwenkhebel
- 5a, 5b: Seitenflächen
- 53: Rand
- 6: Schwenkachse
- 7: Halteteil
- 7a, 7b: Seitenwangen
- 8: Befestigungspunkten
- 9: Kardangelenk
- 10: Lenkwellenteil
- 11: Verstellrichtung
- 12: Verstellrichtung
- 13: Fixiermechanismus
- 14: Spannbolzen
- 15: Nockenmechanismus
- 16: Gegendrucklager
- 17: Spannhebel
- 18: Träger
- 19: Rovings
- 20: oberen Haltfaden
- 21: unteren Haltfaden
- 22: Gelege
- 23: Gelegefasern
- 24: Paket
- 25: Gelegehaltefäden
- 26: Gelegefasern
- 27: Gelegepaket
- 28: Form- und Füllwerkzeug
- 29: Füllöffnung
- 71: Zwischenbauteil
- 72: Zwischenbauteil
- 73: Rand
- 74: Verbindungselement
- 75: Rastelement
- 76: Rastelement
- 77: Schwenkachsenverstärkung
- 78: Schwenkachsenverstärkung
- 79: Druckschienen
- 80: Kabelhalter
- 181: Trägerfasern
- 182: Trägerfasern
- 183: Umriss
- 184: Trennlinie
- 191: Verstärkungsfasern
- 281: Unterwerkzeug
- 282: Oberwerkzeug
- 283: Formraum
- 284: Formrand
- 285: Heizelement
- 286: Sonotrode
- 287: UV-Lichtquelle

## Patentansprüche

1. Lenksäule (1) für ein Kraftfahrzeug umfassend:
▪ eine Lenkspindel (2), die um ihre Achse (3) drehbar in einer Lenkspindellagereinheit gelagert ist,
▪ ein Halteteil (7), das dazu ausgebildet ist, die Lenkspindellagereinheit direkt oder indirekt mit der Karosserie des Kraftfahrzeuges zu verbinden,
wobei zumindest eines der Bauteile der Lenksäule (1) zumindest teilweise aus einem Werkstoff gebildet ist, der Verstärkungsfasern (191) enthält,
**dadurch gekennzeichnet, dass** die Verstärkungsfasern (191) in einer Ebene nicht nur gestreckt, sondern auf vorgegebenen Bahnen in winkelunabhängiger Ablage angeordnet sind und mittels mehrerer Haltefasern (20, 21), die unter einem Winkel, der größer als 0° ist, zu den Bahnen der Verstärkungsfasern (191) verlaufen und die Verstärkungsfasern (191) umschließen, an einem Träger (18) aus Trägerfasern (181, 182), die in einem Webverfahren miteinander verbunden sind, fixiert sind und ein Verstärkungselement bilden.

2. Lenksäule (1) nach Anspruch 1, **dadurch gekennzeichnet, dass** mindestens ein Gelege (22) vorgesehen ist, welches parallel ausgerichtete Gelegefasern (26) umfasst, die miteinander verbunden sind, und auf dessen Oberfläche das Verstärkungselement angeordnet sind.

3. Lenksäule (1) nach Anspruch 1 oder 2, **dadurch gekennzeichnet, dass** mindestens zwei Gelege (22) vorgesehen sind, die jeweils parallel ausgerichtete und miteinander verbundene Gelegefasern (26) umfassen, wobei die in Bahnen verlaufenden Verstärkungsfasern (191) des Verstärkungselements zwischen den Gelegen (22) angeordnet sind.

4. Lenksäule nach einem der Ansprüche 2 oder 3, **dadurch gekennzeichnet, dass** mindestens zwei Gelege (22) vorgesehen sind, wobei die Richtungen der jeweils in einem Gelege (22) zueinander parallel ausgerichteten Gelegefasern (26) in den wenigstens zwei Gelegen (22) zueinander verschieden sind, wobei der Winkel, den die Gelegefasern (26) zueinander einnehmen, bevorzugt in einem Bereich von mindestens 10° bis maximal 80° liegt.

5. Lenksäule nach einem oder mehreren der vorangehenden Ansprüche, **dadurch gekennzeichnet, dass** die die Verstärkungsfasern (191) umfassende Baueinheit mit einem aushärtbaren Harz getränkt sind.

6. Verfahren zur Herstellung einer Lenksäule (1) umfassend:
▪ Eine Lenkspindel (2), die um ihre Achse (3) drehbar in einer Lenkspindellagereinheit gelagert ist,
▪ Ein Halteteil (7), dass dazu ausgebildet ist, die Lenkspindellagereinheit direkt oder indirekt mit der Karosserie des Kraftfahrzeuges zu verbinden,
wobei zumindest eines der Bauteile der Lenksäule (1) als Faserverbundbauteil ausgebildet ist mit folgenden Schritten:
a) Positionieren eines Trägers (18), bestehend aus Trägerfasern, die in einem Webverfahren miteinander verbunden sind;
b) Winkelunabhängiges Positionieren von Verstärkungsfasern (191) entlang vorgegebener Bahnen von Spannungsverläufen auf der Oberfläche des Trägers (18) und fixieren der Verstärkungsfasern (191) mit Haltefasern (20, 21) in einem Näh- oder Stickverfahren, zur Bildung eines Verstärkungselements;
c) Verbringen des Verstärkungselements in ein Werkzeug (281, 283) zur Formung der Topologie des Verstärkungselements;
d) Ausgießen des Verstärkungselements mit einem aushärtbaren Harz;
e) Aushärten des Harzes und Bildung des Faserverbundbauteils;
f) Montage der Lenksäule (1) unter Einbau des Faserverbundbauteils in die Lenksäule (1).

7. Verfahren zur Herstellung einer Lenksäule (1) umfassend:
▪ Eine Lenkspindel (2), die um ihre Achse (3) drehbar in einer Lenkspindellagereinheit gelagert ist,
▪ Ein Halteteil (7), dass dazu ausgebildet ist, die Lenkspindellagereinheit direkt oder indirekt mit der Karosserie des Kraftfahrzeuges zu verbinden,
wobei zumindest eines der Bauteile der Lenksäule (1) als Faserverbundbauteil ausgebildet ist mit folgenden Schritten:
a) Positionieren eines Trägers (18), bestehend aus Trägerfasern, die in einem Webverfahren miteinander verbunden sind;
b) Winkelunabhängiges Positionieren von Verstärkungsfasern (191) entlang vorgegebener Bahnen von Spannungsverläufen auf der Oberfläche des Trägers (18) und fixieren der Verstärkungsfasern (191) mit Haltefasern (20, 21) in einem Näh- oder Stickverfahren, zur Bildung eines Verstärkungselements;
c) Aufbringen des Verstärkungselements auf zumindest einem Gelege (22), umfassend jeweils parallel ausgerichtete Gelegefasern (23), die miteinander verbunden sind, zur Bildung eines Verstärkungspakets;
d) Verbringen des Verstärkungspakets in ein Werkzeug (281, 282) zur Formung der Topologie des Verstärkungspakets;
e) Ausgießen des Verstärkungspakets mit einem aushärtbaren Harz;
f) Aushärten des Harzes und Bildung des Faserverbundbauteils;
g) Montage der Lenksäule (1) unter Einbau des Faserverbundbauteils in die Lenksäule (1).

8. Verfahren zur Herstellung einer Lenksäule (1) nach Anspruch 7, **dadurch gekennzeichnet, dass** in einem Verfahrensschritt vor dem Ausgießen des Verstärkungspakets mit einem aushärtbaren Harz ein oder mehrere Funktionselemente an vordefinierten Stellen positioniert werden, um durch die daran anschließenden Verfahrensschritte mit den Verstärkungsfasern (191) verbunden zu werden, um mit dem Faserverbundbauteil ein einstückiges Bauteil zu bilden.

9. Verfahren zur Herstellung einer Lenksäule (1) nach einem oder mehreren der Ansprüche 7 bis 8, **dadurch gekennzeichnet, dass** vor oder während der Einbringung des Verstärkungspakets in das Werkzeug (281, 282) das Verstärkungspaket an seinem Rand mit einer vorgegebenen Umfangskontur beschnitten wird.

10. Verfahren zur Herstellung einer Lenksäule (1) nach Anspruch 7 bis 9, **dadurch gekennzeichnet, dass** vor oder während der Einbringung des Verstärkungspakets in das Werkzeug (281, 282) das Verstärkungspaket mit Aussparungen versehen wird, die für Funktionen des fertigen Faserverbundbauteils erforderlich sind.

## Claims

1. Steering column (1) for a motor vehicle comprising:
• a steering spindle (2), which is mounted rotatably about its axis (3) in a steering spindle bearing unit,
• a holding part (7), which is designed to connect the steering spindle bearing unit directly or indirectly to the body of the motor vehicle,
wherein at least one of the components of the steering column (1) is at least partially formed from a material that contains reinforcing fibres (191),
**characterized in that** the reinforcing fibres (191) are arranged in a plane not only stretched out but also in an angle-independently deposited form over prescribed paths and are fixed by means of multiple holding fibres (20, 21), which run at an angle that is greater than 0° in relation to the paths of the reinforcing fibres (191) and enclose the reinforcing fibres (191), on a backing (18) comprising backing fibres, (181, 182) which are connected to one another in a weaving process, and said reinforcing fibres form a reinforcing element.

2. Steering column (1) according to Claim 1, **characterized in that** at least one nonwoven scrim (22) is provided, comprising parallel-oriented nonwoven fibres (26) which are connected to one another and on the surface of which the reinforcing element is arranged.

3. Steering column (1) according to Claim 1 or 2, **characterized in that** at least two nonwoven scrims (22) are provided, comprising nonwoven fibres (26) which are respectively oriented in parallel and are connected to one another, the reinforcing fibres (191) of the reinforcing element that run in paths being arranged between the scrims (22).

4. Steering column according to either of Claims 2 and 3, **characterized in that** at least two nonwoven scrims (22) are provided, the directions of the nonwoven fibres that are respectively oriented parallel to one another in a scrim (22) being different from one another in the at least two scrims (22), the angle that the nonwoven fibres (26) assume in relation to one another preferably being in a range from at least 10° to at most 80°.

5. Steering column according to one or more of the preceding claims, **characterized in that** the structural unit comprising the reinforcing fibres (191) is impregnated with a curable resin.

6. Method for producing a steering column (1) comprising:
• a steering spindle (2), which is mounted rotatably about its axis (3) in a steering spindle bearing unit,
• a holding part (7), which is designed to connect the steering spindle bearing unit directly or indirectly to the body of the motor vehicle,
wherein at least one of the components of the steering column (1) is formed as a fibre composite component, with the following steps:
a) positioning a backing (18), consisting of backing fibres which are connected to one another in a weaving process,
b) positioning reinforcing fibres (191) angle-independently along prescribed paths of stress profiles on the surface of the backing (18) and fixing the reinforcing fibres (191) with holding fibres (20, 21) in a sewing or embroidering process to form a reinforcing element;
c) introducing the reinforcing element into a mould (281, 283) for forming the topology of the reinforcing element;
d) filling the reinforcing element with a curable resin;
e) curing the resin and forming the fibre composite component;
f) fitting the steering column (1) while incorporating the fibre composite component in the steering column (1).

7. Method for producing a steering column (1) comprising:
• a steering spindle (2), which is mounted rotatably about its axis (3) in a steering spindle bearing unit,
• a holding part (7), which is designed to connect the steering spindle bearing unit directly or indirectly to the body of the motor vehicle,
wherein at least one of the components of the steering column (1) is formed as a fibre composite component, with the following steps:
a) positioning a backing (18), consisting of backing fibres which are connected to one another in a weaving process,
b) positioning reinforcing fibres (191) angle-independently along prescribed paths of stress profiles on the surface of the backing (18) and fixing the reinforcing fibres (191) with holding fibres (20, 21) in a sewing or embroidering process to form a reinforcing element;
c) applying the reinforcing element to at least one nonwoven scrim (22), comprising respectively parallel-oriented nonwoven fibres (23) which are connected to one another to form a reinforcing package;
d) introducing the reinforcing package into a mould (281, 282) for forming the topology of the reinforcing package;
e) filling the reinforcing package with a curable resin;
f) curing the resin and forming the fibre composite component;
g) fitting the steering column (1) while incorporating the fibre composite component in the steering column (1).

8. Method for producing a steering column (1) according to Claim 7, **characterized in that** one or more functional elements are positioned at predefined locations in a method step before the filling of the reinforcing package with a curable resin, in order to be connected to the reinforcing fibres (191) by the then-following method steps in order to form a one-piece component with the fibre composite component.

9. Method for producing a steering column (1) according to one or more of Claims 7 and 8, **characterized in that**, before or during the introduction of the reinforcing package into the mould (281, 282), the reinforcing package is advantageously trimmed at its periphery with a prescribed circumferential contour.

10. Method for producing a steering column (1) according to Claims 7 to 9, **characterized in that**, before or during the introduction of the reinforcing package into the mould (281, 282), the reinforcing package is provided with clearances that are required for functions of the finished fibre composite component.

## Revendications

1. Colonne de direction (1) pour véhicule automobile, comprenant :
une broche de direction (2) montée à rotation autour de son axe (3) dans une unité de palier de broche de direction,
une pièce de maintien (7) configurée pour relier directement ou indirectement l'unité de palier de broche de direction à la carrosserie du véhicule automobile,
au moins l'un des composants de la colonne de direction (1) étant au moins en partie formé d'un matériau qui contient des fibres de renfort (191), **caractérisée en ce que**
les fibres de renfort (191) sont disposées dans un plan non seulement en étirement mais sur des pistes prédéterminées selon une pose indépendante de l'angle et sont fixées au moyen de plusieurs fibres de maintien (20, 21) qui s'étendent suivant un angle supérieur à 0° par rapport aux pistes des fibres de renfort (191) et qui englobent les fibres de renfort (191) sur un support (18) en fibres de support (181, 182) reliées les unes aux autres dans une opération de tissage, pour former un élément de renfort.

2. Colonne de direction (1) selon la revendication 1, **caractérisée en ce qu'**au moins une couche (22) est prévue et comporte des fibres de couche (26) orientées parallèlement et reliées les unes aux autres, sur la surface desquelles l'élément de renfort est disposé.

3. Colonne de direction (1) selon les revendications 1 ou 2, **caractérisée en ce qu'**au moins deux couches (22) qui comprennent chacune des fibres de couche (26) orientées parallèlement et reliées les unes aux autres sont prévues, les fibres de renfort (191) s'étendant en pistes de l'élément de renfort étant disposées entre les couches (22).

4. Colonne de direction selon l'une des revendications 2 ou 3, **caractérisée en ce qu'**au moins deux couches (22) sont prévues, les directions des fibres de couche (26) orientées parallèlement les unes aux autres dans une couche (22) étant différentes dans les deux ou plusieurs couches (22), l'angle formé par les fibres de couche (26) étant compris de préférence dans une plage s'étendant entre au moins 10° à au plus 80°.

5. Colonne de direction selon l'une ou plusieurs des revendications précédentes, **caractérisée en ce que** le module comprenant les fibres de renfort (191) est imprégné par une résine durcissable.

6. Procédé de fabrication d'une colonne de direction (1) comportant
une broche de direction (2) montée à rotation autour de son axe (3) dans une unité de palier de broche de direction,
une pièce de maintien (7) configurée pour relier directement ou indirectement l'unité de palier de broche de direction à la carrosserie du véhicule automobile,
au moins l'un des composants de la colonne de direction (1) étant configuré comme composant composite de fibres, le procédé comportant les étapes suivantes :
a) positionnement d'un support (18) constitué de fibres de support reliées les unes aux autres dans une opération de tissage,
b) positionnement indépendant de l'angle de fibres de renfort (191) le long de pistes prédéterminées d'évolution de tension sur la surface du support (18) de fixation de fibres de renfort (191) à l'aide de fibres de maintien (20, 21) dans une opération de couture ou de piqûre pour former un élément de renfort,
c) placement de l'élément de renfort dans un outil (281, 283) de formation de la topologie de l'élément de renfort,
d) imprégnation de l'élément de renfort par résine durcissable,
e) durcissement de la résine et formation du composant en composite de fibres et
f) montage de la colonne de direction (1) en incorporant le composant composite de fibres dans la colonne de direction (1).

7. Procédé de fabrication d'une colonne de direction (1) comportant
une broche de direction (2) montée à rotation autour de son axe (3) dans une unité de palier de broche de direction,
une pièce de maintien (7) configurée pour relier directement ou indirectement l'unité de palier de broche de direction à la carrosserie du véhicule automobile,
au moins l'un des composants de la colonne de direction (1) étant configuré comme composant composite de fibres, le procédé comportant les étapes suivantes :
a) positionnement d'un support (18) constitué de fibres de support reliées les unes aux autres dans une opération de tissage,
b) positionnement indépendant de l'angle de fibres de renfort (191) le long de pistes prédéterminées d'évolution de tension sur la surface du support (18) de fixation de fibres de renfort (191) à l'aide de fibres de maintien (20, 21) dans une opération de couture ou de piqûre pour former un élément de renfort,
c) placement de l'élément de renfort sur au moins une couche (22) comprenant des fibres de couche (23) alignées parallèlement les unes aux autres et reliées les unes aux autres, pour former un ensemble de renfort,
d) placement de l'élément de renfort dans un outil (281, 282) de formation de la topologie de l'élément de renfort,
e) imprégnation de l'élément de renfort par une résine durcissable,
f) durcissement de la résine et formation du composant en composite de fibres et
g) montage de la colonne de direction (1) en incorporant le composant composite de fibres dans la colonne de direction (1).

8. Procédé de fabrication d'une colonne de direction (1) selon la revendication 7, **caractérisé en ce que** dans une étape du procédé qui précède l'imprégnation de l'ensemble de renfort par une résine durcissable, un ou plusieurs éléments fonctionnels sont placés en des emplacements définis pour être reliés aux fibres de renfort (191) grâce aux étapes de traitement suivantes pour ainsi former avec le composant en composite de fibres un composant d'un seul tenant.

9. Procédé de fabrication d'une colonne de direction (1) selon l'une ou plusieurs des revendications 7 et 8, **caractérisé en ce qu'**avant ou pendant l'amenée de l'ensemble de renfort dans l'outil (281, 282), l'ensemble de renfort est découpé sur son bord suivant un contour périphérique prédéterminé.

10. Procédé de fabrication d'une colonne de direction (1) selon l'une ou plusieurs des revendications 7 à 9, **caractérisé en ce qu'**avant ou pendant l'amenée de l'ensemble de renfort dans l'outil (281, 282), l'ensemble de renfort est doté de découpes qui sont nécessaires pour des fonctions du composant en composite de fibres terminées.
